# EUROPÄISCHE PATENTSCHRIFT

(11) **EP 2 282 396 B1**
(45) Veröffentlichungstag und Bekanntmachung des Hinweises auf die Patenterteilung: **05.12.2012**
(21) Anmeldenummer: 09167044.8
(22) Anmeldetag: 03.08.2009
(51) Int. Cl.: H02K 15/00, H02K 17/16

(54) **Herstellungsverfahren für geschrägte Käfigläufer und geschrägter Käfigläufer**
Production method for a rotor with skewed squirrel-cage and rotor with skewed squirrel-cage
Procédé de fabrication pour rotor à cage d'écureuil oblique et rotor à cage d'écureuil oblique

(43) Veröffentlichungstag der Anmeldung: 09.02.2011
(73) Patentinhaber: Siemens Aktiengesellschaft, 80333 München (DE)
(72) Erfinder: Büttner, Klaus, 97618 Hollstadt (DE); Kirchner, Klaus, 97645 Ostheim (DE); Müller, Michael, 97688 Bad Kissingen (DE)

(56) Entgegenhaltungen:
- EP-A- 1 347 560
- JP-A- 8 149 768
- JP-A- 8 223 878
- JP-A- 10 028 360
- JP-A- 10 234 166
- JP-A- 2005 278 373

## Beschreibung

Die Erfindung betrifft ein Verfahren zur Herstellung eines geschrägten Käfigläufers für eine Asynchronmaschine sowie einen mit einem derartigen Verfahren herstellbaren Käfigläufer.

Neue Wirkungsgradnormen für Standard-Asynchronmaschinen wie IE1, IE2 bzw. IE3 erfordern ein erhöhtes Maß an Materialeinsatz, da die Baulänge dieser Maschinen zur Einhaltung besagter Normen immer größer werden muss. Mit dem vielfach bewerten Aluminiumdruckgussverfahren wird es in Zukunft immer schwieriger, den wachsenden Anforderungen an den Wirkungsgrad der Maschinen gerecht zu werden.

Die geforderten Wirkungsgrade sind jedoch mit einem Käfigläufer aus Kupfer zu erreichen. Aufgrund des höheren elektrischen Leitwertes von Kupfer gegenüber Aluminium können hier auch schon bei kürzerer Baulänge höhere Wirkungsgrade erzielt werden.

Zur Herstellung von Käfigläufern aus Kupfer ist das Kupferdruckgussverfahren bekannt. Dieses ist jedoch sehr aufwändig und insbesondere bei größeren Achshöhen technologisch nicht mehr durchführbar. Die Anforderungen an das Druckgusswerkzeug sowie die Prozessparameter sind bei der Verwendung von flüssigem Kupfer mit einer Temperatur von über 1.100° C nur mit sehr hohem Aufwand zu beherrschen.

Aus der DE 43 08 683 A1 ist ein Verfahren zur Herstellung eines Käfigläufers bekannt, bei dem zunächst aus Kupfer bestehende Kurzschlussstäbe in Nuten eines Blechpaketes des Läufers eingeschoben werden. Diese Kupferstäbe werden stirnseitig durch Kurzschlussringe miteinander verbunden. Zur Herstellung dieser Kurzschlussringe wird ein Aluminiumdruckgussverfahren angewandt. Beim Vergießen der Kurzschlussringe wird gleichzeitig der in den Nuten gegenüber den eingesetzten Kupferstäben verbleibende Restquerschnitt mit Aluminium ausgegossen, so dass die Kurzschlussringe auch mit den in dem Restquerschnitt gebildeten druckgegossenen Stabteilen verbunden werden. Ferner ist aus dieser Schrift bekannt, ein derartiges Läuferblechpaket nach dem Einlegen der Kurzschlussstäbe um einen gewünschten Schrägungswinkel zu schrägen, wodurch sich die Laufeigenschaften der Maschine verbessern.

Eine so hergestellte Asynchronmaschine hat den Vorteil, dass der Wirkungsgrad aufgrund der in die Nuten eingelegten Kupferstäbe im Bereich einer Asynchronmaschine mit Kupferdruckgussläufer liegt, ihre Herstellungskosten jedoch deutlich geringer sind. Dies ist darauf zurückzuführen, dass der Druckgussprozess mit Aluminium durchgeführt wird, welches eine deutlich niedrigere Schmelztemperatur als Kupfer aufweist.

Ein Herstellungsverfahren und ein Käfigläufer gemäß dem Präambel des Anspruchs 1 bzw. 7 sind aus JP 10028360 und JP 8 223 878 bekannt.

Der Erfindung liegt die Aufgabe zugrunde, den Wirkungsgrad einer derartigen Asynchronmaschine zu verbessern.

Diese Aufgabe wird durch ein Verfahren zur Herstellung eines Käfigläufers für eine Asynchronmaschine mit den Merkmalen gemäß Anspruch 1 gelöst. Ein solches Verfahren umfasst die Verfahrensschritte:
- Schrägung eines Läuferblechpaketes mit Nuten,
- Einlegen von Kurzschlussstäben eines zweiten Materials in die Nuten des geschrägten Läuferblechpaketes,
- stirnseitiges Angießen von Kurzschlussringen aus einem ersten Material mit einem geringeren spezifischen elektrischen Leitwert als der des zweiten Materials an das Läuferblechpaket,
wobei die Kurzschlussstäbe vor dem Einlegen in die Nuten eine derartige Schrägung aufweisen, dass sie vor einer Applikation des gegossenen ersten Materials weitgehend verspannungsfrei in das geschrägte Läuferblechpaket derart einführbar sind, dass sie einen in radialer Richtung betrachtet innen liegenden Nutbereich nahezu vollständig ausfüllen, so dass das erste Material während des Gussprozesses nicht in den innen liegenden Nutbereich vordringen kann.

Ferner gelingt die Lösung der Aufgabe durch einen Käfigläufer für eine Asynchronmaschine mit den Merkmalen des Anspruchs 7.

Vorteilhafte Ausführungsformen der Erfindung sind den Unteransprüchen zu entnehmen.

Die Erfindung ermöglicht die wirtschaftliche Herstellung eines äußerst effizienten Kurzschlussläufers für eine Asynchronmaschine mit hervorragenden Betriebseigenschaften. Wirkungsgradnormen wie die eingangs erwähnten IE1, IE2, IE3 werden durch den erfindungsgemäßen hybriden Aufbau des Käfigläufers auf eine im Vergleich zu einem Kupferdruckgussläufer deutlich wirtschaftlichere Bauweise ermöglicht. Die Kurzschlussstäbe des Käfigläufers bestehen aus einem Material mit einem höheren spezifischen Leitwert als das Material der Kurzschlussringe.

In vorteilhafter Ausgestaltung der Erfindung kann beispielsweise für das erste Material der Kurzschlussringe Aluminium verwendet werden und für das zweite Material der Kurzschlussstäbe Kupfer. Kurzschlussringe aus Aluminium lassen sich schon aus einer Schmelze mit einer Temperatur von etwa 600° C gießen, wodurch dieser Prozess sehr gut beherrschbar ist. Aufgrund der sehr leitfähigen Kurzschlussstäbe ist der Wirkungsgrad des Käfigläufers sehr gut. Bei der vorteilhaften Anwendung von Aluminium als erstes Material wird zusätzlich das Trägheitsmoment des Käfigläufers beispielsweise im Vergleich zu einem Vollkupferläufer deutlich reduziert, was eine Erhöhung der Maschinendynamik und eine weitere Verbesserung des Wirkungsgrades insbesondere bei hochdynamischen Anwendungen zur Folge hat.

Der Erfindung liegt die Erkenntnis zugrunde, dass ein derartiger hybrid aufgebauter Käfigläufer hinsichtlich seines Betriebsverhaltens weiter verbessert werden kann, wenn das Läuferblechpaket geschrägt ausgeführt wird. Durch eine solche Schrägung werden Oberwellen im magnetischen Drehfeld vermieden, Geräusche reduziert und die Drehmomentwelligkeit deutlich verringert.

Eine Schrägung kann zwar dadurch erzeugt werden, dass das bereits mit den Kurzschlussstäben bestückte Läuferblechpaket geschrägt wird. Bei Verwendung von geraden Stäben wird der Nutfüllfaktor jedoch reduziert. Denn eine Schrägung des mit den Kurzschlussstäbes bestückten Läuferblechpaketes ist nur dann möglich, wenn in den Nuten nach Einlegen der Kurzschlussstäbe noch ein gewisser Freiraum verbleibt.

Erfindungsgemäß wird daher die Nutfüllung mit den Kurzschlussstäben des leitfähigeren zweiten Materials dadurch erhöht, dass die Kurzschlussstäbe bereits vor dem Einlegen in das Läuferblechpaket eine derartige Schrägung aufweisen, dass sie vor einer Applikation des gegossenen ersten Materials weitgehend verspannungsfrei in das geschrägte Läuferblechpaket derart einführbar sind, dass sie einen in radialer Richtung betrachtet innen liegenden Nutbereich nahezu vollständig ausfüllen, so dass das erste Material während des Gussprozesses nicht in den innen liegenden Nutbereich vordringen kann. Dies hat zur Folge, dass im radial innen liegenden Bereich des Läuferblechpaketes nahezu ausschließlich die Kurzschlussstäbe aus dem vergleichsweise leitfähigen zweiten Material angeordnet sind, während der verbleibende Restquerschnitt der Nuten mit dem ersten Material aufgefüllt werden kann. Da das erste Material weniger leitfähig als zweites Material ist, können auf diese Art und Weise sehr einfach Anlaufstäbe für die Asynchronmaschine gebildet werden. Sinn dieser Anlaufstäbe ist es, während des Anlaufs der Asynchronmaschine einen höheren elektrischen Widerstand zu bewirken. Da während des Anlaufens aufgrund des Skineffekts eine Stromverdrängung im Käfigläufer vom inneren Bereich zum äußeren Bereich stattfindet, fließt der Strom in diesem Moment in erster Linie in dem radial außen liegenden Nutbereich, in dem sich das erste Material befindet.

Sind hingegen die Anlaufstäbe nicht gewünscht, kann vorteilhafter Weise der Querschnitt der Kurzschlussstäbe auch derart gewählt werden, dass die geschrägten Stäbe die Nuten vollständig ausfüllen. Auf diese Art und Weise erhält man den maximal möglichen Kupferfüllfaktor.

Das Auffüllen eines nach dem Einlegen der Kurzschlussstäbe verbleibenden Restquerschnitts der Nuten gelingt in sehr vorteilhafter Ausgestaltung der Erfindung dadurch, dass die mit den Kurzschlussstäben bestückten Nuten durch ein Druckgussverfahren mit dem ersten Material aufgefüllt werden und die Kurzschlussringe mittels des Druckgussverfahrens hergestellt werden. Um die bereits erwähnten Anlaufstäbe zu realisieren, werden hierbei die Kurzschlussstäbe derart in die Nuten eingelegt, dass ein in radialer Richtung des Käfigläufers betrachtet außen liegende Nutbereich durch das Druckgießen mit dem ersten Material gefüllt wird. Auf diese Art und Weise befinden sich z.B. in weiterer vorteilhafter Ausgestaltung aus Kupfer hergestellte Kurzschlussstäbe am innen liegenden Nutbereich und bilden somit die Betriebsstäbe der Asynchronmaschine, während druckgegossene Aluminiumanlaufstäbe im äußeren Nutbereich angeordnet sind. Hierbei können vorteilhafter Weise auch die Kurzschlussringe aus Aluminium hergestellt werden, wodurch sich insgesamt ein vergleichsweise leichter und damit wenig träger Kurzschlussläufer ergibt.

Eine besonders ausgeprägte Reduzierung des Oberwellengehaltes im Drehfeld, der Drehmomentwelligkeit und der Maschinengeräusche wird in vorteilhafter Ausgestaltung der Erfindung dadurch erreicht, dass die Schrägung einer Nutteilung entspricht.

Eine Vermeidung von Wirbelstrom- und Hystereseverlusten im Käfigläufer wird bei einer vorteilhaften Ausführungsform der Erfindung dadurch erzielt, dass das Verfahren weiterhin eine Herstellung des Läuferblechpaketes durch Stapeln von Elektroblechen in axialer Richtung umfasst, wobei die Elektrobleche derart gegeneinander verdreht angeordnet werden, dass sich die besagte Schrägung ergibt.

Eine Asynchronmaschine, die einen Ständer mit einer Ständerwicklung aufweist und einen Käfigläufer, der nach einer der zuvor beschriebenen Ausführungsformen ausgebildet ist, ist deutlich kostengünstiger herzustellen, als ein Kupferdruckgussläufer, erfüllt trotzdem Wirkungsgradnormen, die mit einem vergleichsweise einfach zu fertigenden Aluminiumdruckgussläufer nicht mehr erzielt werden können und besitzt durch die erfindungsgemäße Schrägung hervorragende Betriebseigenschaften. Der Wirkungsgrad der Maschine ist besonders hoch, weil durch die Vorverdrehung der Kurzschlussstäbe der gesamte innen liegende Nutbereich vollständig mit den Kurzschlussstäben ausgefüllt ist.

Im Folgenden wird die Erfindung anhand der in den Figuren dargestellten Ausführungsbeispiele näher beschrieben und erläutert. Es zeigen:
- FIG 1: eine Frontalansicht auf einen verdrehten Kurz- schlussstab zum Einlegen in Nuten eines Läufer- blechpaketes gemäß einer Ausführungsform der Erfin- dung,
- FIG 2: eine 3D Darstellung des Kurzschlussstäbestabes nach FIG 1,
- FIG 3: ein Läuferblechpaket gemäß einer Ausgestaltung der Erfindung in Seitenansicht,
- FIG 4: eine stirnseitige Sicht auf das Läuferblechpaket gemäß FIG 3,
- FIG 5: eine Schnittdarstellung des Läuferblechpaketes ge- mäß FIG 4 mit geraden Kurzschlussstäben
- FIG 6: eine Schnittdarstellung des Läuferblechpaketes ge- mäß FIG 4 mit vorverdrehten Kurzschlussstäben
- FIG 7: gerade Kurzschlussstäbe in einer 3D Ansicht,
- FIG 8: vorverdrehte Kurzschlussstäbe in einer 3D Ansicht,
- FIG 9: einen Schnitt durch ein geschrägtes Läuferblechpa- ket umfassen axial gestapelte Elektrobleche und
- FIG 10: eine Asynchronmaschine mit einem Käfigläufer gemäß einer Ausführungsform der Erfindung.

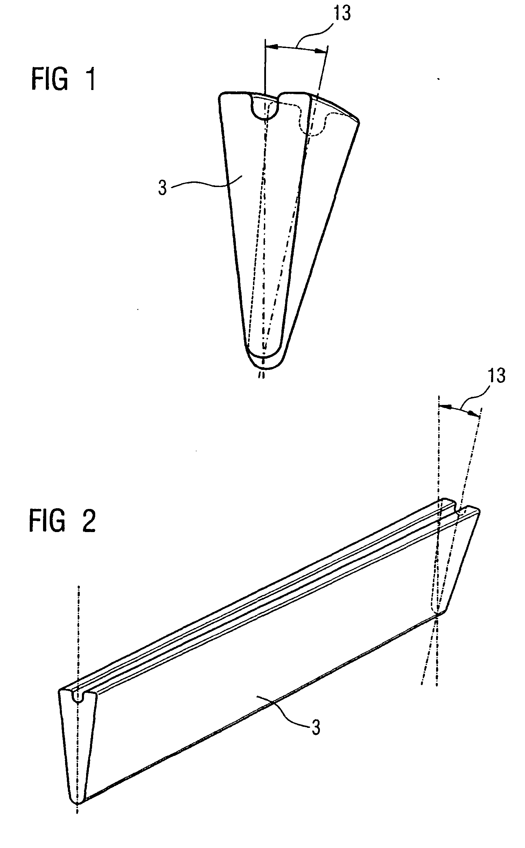

Die Figuren 1 und 2 zeigen einen verdrehten Kurzschlussstab 3 zum Einlegen in Nuten eines Läuferblechpaketes gemäß einer Ausführungsform der Erfindung. Die Verdrehung des Kurzschlussstabs 3 ist durch einen Verdrehwinkel 13 gekennzeichnet, der einen durch die Verdrehung bewirkten Versatz in Umfangsrichtung der Maschine der beiden Kurzschlussstabenden charakterisiert. Ein solcher Kurzschlussstab 3, der beispielsweise als Kupferstab ausgeführt ist, kann nahezu verspannungsfrei in die Nuten eines geschrägten Läuferblechpaketes eingeführt werden.

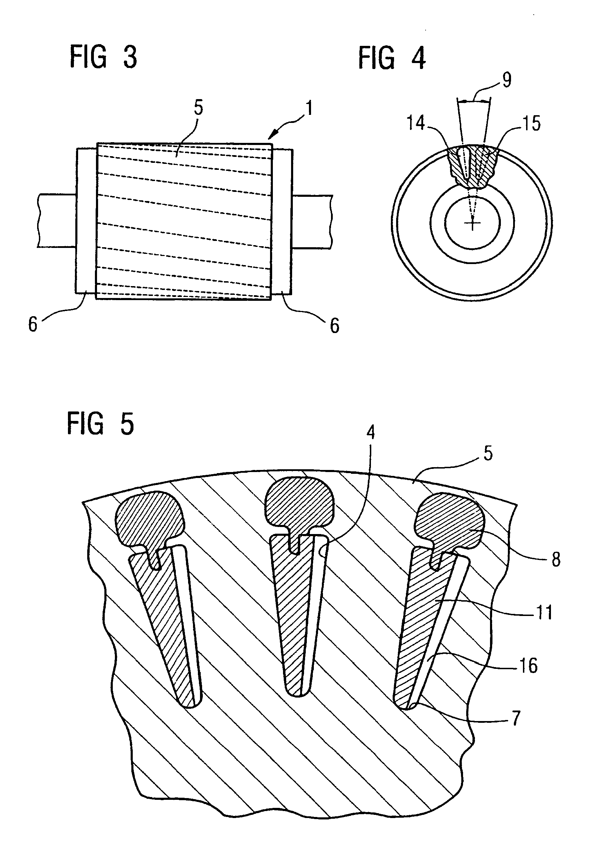

So zeigt FIG 3 ein Läuferblechpaket 5 eines Käfigläufers 1 gemäß einer Ausgestaltung der Erfindung in Seitenansicht. Gestrichelt ist der durch die Schrägung bewirkte Verlauf der Nuten des Läuferblechpaketes 5 dargestellt, in die Kurzschlussstäbe eingefügt werden. Nach dem Einfügen dieser Kurzschlussstäbe werden jeweils stirnseitig Kurzschlussringe 6 an das Läuferblechpaket 5 angegossen. Bei diesem Gießprozess werden auch verbleibende Restquerschnitte in den Nuten, die von den Kurzschlussstäben nicht ausgefüllt werden, mit dem Gussmaterial aufgefüllt.

FIG 4 zeigt eine stirnseitige Sicht auf das Läuferblechpaket 5 gemäß FIG 3. Es handelt sich um eine Teilschnittdarstellung, bei der zu erkennen ist, dass durch die Schrägung ein erstes stirnseitiges Nutende 14 in Umfangsrichtung um genau eine Nutteilung 9 von einem zweiten stirnseitigen Nutende 15 derselben Nut versetzt angeordnet ist.

FIG 5 zeigt eine Schnittdarstellung des Läuferblechpaketes 5 gemäß FIG 4 mit geraden Kurzschlussstäben 11. Die dargestellte Belegung der Nuten 4 kann dadurch erzeugt werden, dass entweder die geraden Kurzschlussstäbe 11 in ein noch nicht geschrägtes Läuferblechpaket 5 eingeführt werden, und anschließend das bereits bestückte Läuferblechpaket 5 durch Verdrehung geschrägt wird. Hierbei werden die Kurzschlussstäbe 11 entsprechend in eine Schräge Lage gebracht. Es entsteht jedoch in einem radial inneren Nutbereich 7 ein Freiraum 16, was zur Folge hat, dass der Nutfüllfaktor in dem innen liegenden Nutbereich 7 reduziert wird. Einen ähnlichen Effekt bewirkt ein Herstellungsverfahren, bei dem die geraden Kurzschlussstäbe 11 in ein bereits geschrägtes Läuferblechpaket 5 eingeführt werden.

Weiterhin ist in FIG 5 zu erkennen, dass ein radial außen liegender Nutbereich 8 mit dem ersten Material ausgefüllt ist. Da dieses Material, welches vorzugsweise ein Aluminiumdruckgussmaterial ist, einen im Vergleich zu den Kurzschlussstäben 11 geringeren elektrischen Leitwert aufweist, werden auf diese Art und Weise Anlaufstäbe für die Asynchronmaschine realisiert.

Die Verwendung gerader Stäbe 11 hat den Nachteil, dass der Nutfüllbereich im radial innen liegenden Nutbereich 7 reduziert wird.

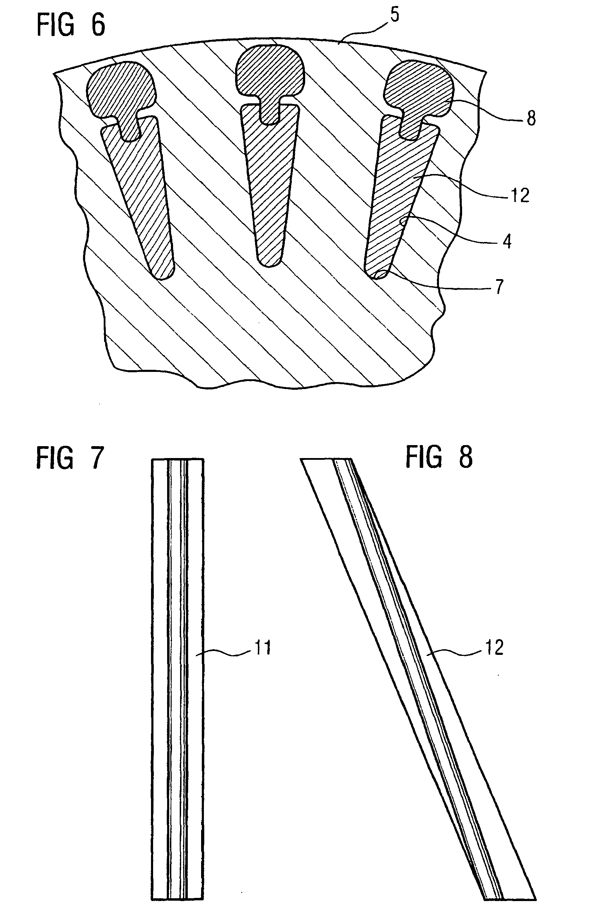

FIG 6 zeigt eine Schnittdarstellung des Läuferblechpaketes 5 gemäß FIG 4 mit verdrehten Kurzschlussstäben 12. Es ist deutlich zu erkennen, dass hierbei der komplette innen liegende Nutbereich 7 mit dem Kurzschlussstab 12, bei dem es sich insbesondere um einen verdrehten Kupferstab handelt, ausgefüllt ist. Diese hohe Nutfüllung bewirkt den höchstmöglichen Wirkungsgrad. Im radial außen liegenden Nutbereich 8 ist wiederum ein Anlaufstab aus Aluminiumdruckgussmaterial realisiert. Aufgrund der nahezu hundertprozentigen Nutfüllung im radial innen liegenden Nutbereich 7 mit dem Kupferstab befindet sich das Aluminiumdruckgussmaterial nahezu ausschließlich im außen liegenden Nutbereich 8 und bildet dort den im Anlaufmoment gewünschten hohen ohmschen Widerstand des Kurzschlusskäfigs.

FIG 7 zeigt den geraden Kurzschlussstab 11, der in das Läuferblechpaket 5 gemäß FIG 5 eingeführt wurde. Im Unterschied hierzu zeigt FIG 8 den bereits verdrehten Kurzschlussstab 12, mit dem gemäß FIG 6 die größtmögliche Nutfüllung erzielt werden kann.

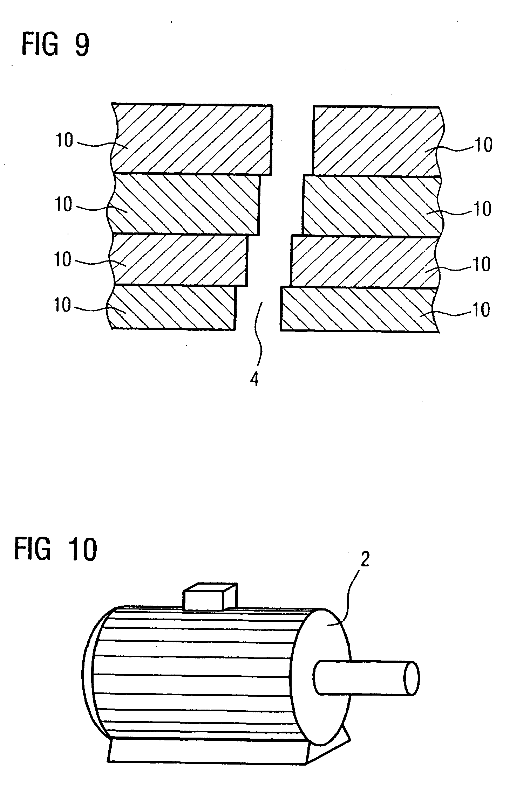

FIG 9 zeigt einen Schnitt durch ein geschrägtes Läuferblechpaket umfassend axial gestapelte Elektrobleche 10. Die Elektrobleche 10 sind hierbei derart gegeneinander verdreht, dass sich die gewünschte Nutschrägung beispielsweise um genau eine Nutteilung ergibt. Durch Stanzpaketieren kann das Läuferblechpaket aus den dargestellten Elektroblechen 10 gefertigt werden. Alternativ kann das Läuferblechpaket durch Stapeln der Elektrobleche 10 auf einem Fädeldorn mit einer geschrägten Fädelnut hergestellt werden.

FIG 10 zeigt schließlich eine Asynchronmaschine 2 mit einem Käfigläufer gemäß einer Ausführungsform der Erfindung. Aufgrund des hybriden Aufbaus dieser Asynchronmaschine 2, die einen Käfigläufer aus Kupferstäben aufweist, die stirnseitig über Aluminiumdruckgussringe miteinander verbunden sind, werden hohe Wirkungsgrade erzielt. Da der Käfigläufer geschrägt ausgeführt ist, besitzt die Asynchronmaschine einen äußerst geringen Oberwellengehalt, ist sehr geräuscharm und zeichnet sich durch niedrige Drehmomentwelligkeit aus.

## Patentansprüche

1. Verfahren zur Herstellung eines Käfigläufers (1) für eine Asynchronmaschine (2) mit folgenden Verfahrensschritten:
- Schrägung eines Läuferblechpaketes (5) mit Nuten (4),
- Einlegen von Kurzschlussstäben (3;11;12) eines zweiten Materials in die Nuten (4) des geschrägten Läuferblechpaketes (5),
- stirnseitiges Angießen von Kurzschlussringen (6) aus einem ersten Material mit einem geringeren spezifischen elektrischen Leitwert als der des zweiten Materials an das Läuferblechpaket (5),
**dadurch gekennzeichnet , dass**
die Kurzschlussstäbe (3;11;12) vor dem Einlegen in die Nuten (4) eine derartige Schrägung aufweisen, dass sie vor einer Applikation des gegossenen ersten Materials weitgehend verspannungsfrei in das geschrägte Läuferblechpaket (5) derart einführbar sind, dass sie einen in radialer Richtung betrachtet innen liegenden Nutbereich (7) nahezu vollständig ausfüllen, so dass das erste Material während des Gussprozesses nicht in den innen liegenden Nutbereich (7) vordringen kann.

2. Verfahren nach Anspruch 1,
wobei die mit den Kurzschlussstäben (3;11;12) bestückten Nuten (4) durch ein Druckgussverfahren mit dem ersten Material aufgefüllt werden und die Kurzschlussringe (6) mittels des Druckgussverfahrens hergestellt werden.

3. Verfahren nach einem der vorhergehenden Ansprüche,
wobei die Kurzschlussstäbe (3;11;12) derart in die Nuten (4) eingelegt werden, dass ein in radialer Richtung des Käfigläufers (1) betrachtet außen liegender Nutbereich (8) durch das Druckgießen mit dem ersten Material gefüllt wird.

4. Verfahren nach einem der vorhergehenden Ansprüche,
wobei als erstes Material Aluminium und als zweites Material Kupfer verwendet wird.

5. Verfahren nach einem der vorhergehenden Ansprüche,
wobei die Schrägung einer Nutteilung (9) entspricht.

6. Verfahren nach einem der vorhergehenden Ansprüche,
wobei das Verfahren weiterhin eine Herstellung des Läuferblechpaketes (5) durch Stapeln von Elektroblechen (10) in axialer Richtung umfasst, wobei die Elektrobleche (10) derart gegeneinander verdreht angeordnet werden, dass sich die besagte Schrägung ergibt.

7. Käfigläufer (1) für eine Asynchronmaschine (2), wobei der Käfigläufer (1)
- ein Läuferblechpaket (5) mit Nuten (4),
- stirnseitig an das Läuferblechpaket (5) angegossene Kurzschlussringe (6) eines ersten Materials und
- in den Nuten (4) angeordnete Kurzschlussstäbe (3;11;12) eines zweiten Materials mit einem höheren spezifischen elektrischen Leitwert als der des ersten Materials umfasst,
wobei das Läuferblechpaket (5) und die Kurzschlussstäbe (3;11;12) eine Schrägung aufweisen,
**dadurch gekennzeichnet , dass** die Kurzschlussstäbe (3;11;12) einen in radialer Richtung des Läuferblechpaketes (5) betrachtet innen liegenden Nutbereich (7) nahezu vollständig ausfüllen, indem bei einer Herstellung des Käfigläufers (1) die Kurzschlussstäbe (3;11;12) vor dem Einlegen in die Nuten (4) eine derartige Schrägung aufweisen, dass sie vor einer Applikation des gegossenen ersten Materials weitgehend verspannungsfrei in das geschrägte Läuferblechpaket (5) derart einführbar sind, dass sie einen in radialer Richtung betrachtet innen liegenden Nutbereich (7) nahezu vollständig ausfüllen, so dass das erste Material während des Gussprozesses nicht in den innen liegenden Nutbereich (7) vordringen kann.

8. Käfigläufer (1) nach Anspruch 7,
wobei die mit den Kurzschlussstäbe (3;11;12) bestückten Nuten (4) durch ein Druckgussverfahren mit dem ersten Material aufgefüllt sind, wobei die Kurzschlussringe (6) mittels des Druckgussverfahrens hergestellt sind.

9. Käfigläufer (1) nach Anspruch 7 oder 8,
wobei der mit dem ersten Material aufgefüllte Bereich der Nuten (4) in radialer Richtung des Käfigläufers (1) betrachtet außen angeordnet ist.

10. Käfigläufer (1) nach einem Ansprüche 7 bis 9,
wobei das erste Material Aluminium und das zweite Material Kupfer ist.

11. Käfigläufer (1) nach einem Ansprüche 7 bis 10,
wobei die Schrägung einer Nutteilung (9) entspricht.

12. Käfigläufer (1) nach einem Ansprüche 7 bis 11,
wobei das Läuferblechpaket (5) in axialer Richtung gestapelte Elektrobleche (10) umfasst, wobei die Elektrobleche (10) derart gegeneinander verdreht angeordnet sind, dass sich die besagte Schrägung ergibt.

13. Asynchronmaschine (2) mit einem Ständer mit einer Ständerwicklung und einem Käfigläufer (1) nach einem der Ansprüche 7 bis 12.

## Claims

1. Method for producing a cage rotor (1) for an asynchronous machine (2) having the following method steps:
- bevelling a laminated rotor core (5) with grooves (4),
- inserting short-circuit bars (3; 11; 12) of a second material into the grooves (4) of the bevelled laminated rotor core (5),
- casting short-circuit rings (6) made of a first material with a lower specific electrical conductivity than that of the second material onto the front face of the laminated rotor core (5),
**characterised in that**
before insertion into the grooves (4) the short-circuit bars (3; 11; 12) have a bevel such that they may be inserted substantially without distortion into the bevelled laminated rotor core (5) before an application of the cast first material, such that they almost completely fill up an inner groove region (7) viewed in the radial direction, so that during the casting process the first material is not able to penetrate into the inner groove region (7).

2. Method according to claim 1,
wherein the grooves (4) provided with the short-circuit bars (3; 11; 12) are filled with the first material by a die casting method and the short-circuit rings (6) are produced by means of the die casting method.

3. Method according to one of the preceding claims, wherein the short-circuit bars (3; 11; 12) are inserted into the grooves (4) such that an outer groove region (8) viewed in the radial direction of the cage rotor (1) is filled with the first material by the die casting.

4. Method according to one of the preceding claims, wherein aluminium is used as the first material and copper is used as the second material.

5. Method according to one of the preceding claims, wherein the bevel corresponds to one groove pitch (9).

6. Method according to one of the preceding claims, wherein the method further comprises the production of the laminated rotor core (5) by stacking electrical sheets (10) in the axial direction, wherein the electrical sheets (10) are arranged twisted relative to one another so that said bevel results.

7. Cage rotor (1) for an asynchronous machine (2),
wherein the cage rotor (1) comprises
- a laminated rotor core (5) with grooves (4),
- short-circuit rings (6) of a first material cast onto the front face of the laminated rotor core (5), and
- short-circuit bars (3; 11; 12) arranged in the grooves (4) and of a second material with a greater specific electrical conductivity than that of the first material,
wherein the laminated rotor core (5) and the short-circuit bars (3; 11; 12) comprise a bevel and
**characterized in that**
the short-circuit bars (3; 11;12) almost completely fill up an inner groove region (7) viewed in the radial direction of the laminated rotor core (5), by, during manufacture of the cage rotor (1), before insertion into the grooves (4), the short-circuit bars (3; 11; 12) having a bevel such that they may be inserted substantially without distortion into the bevelled laminated rotor core (5) before an application of the cast first material, such that they almost completely fill up an inner groove region (7) viewed in the radial direction, so that during the casting process the first material is not able to penetrate into the inner groove region (7).

8. Cage rotor (1) according to claim 7,
wherein the grooves (4) provided with the short-circuit bars (3; 11; 12) are filled with the first material by a die casting method, wherein the short-circuit rings (6) are produced by means of the die casting method.

9. Cage rotor (1) according to claim 7 or 8,
wherein the region of the grooves (4) filled with the first material is arranged externally, viewed in the radial direction of the cage rotor (1).

10. Cage rotor (1) according to one of claims 7 to 9, wherein the first material is aluminium and the second material is copper.

11. Cage rotor (1) according to one of claims 7 to 10, wherein the bevel corresponds to one groove pitch (9).

12. Cage rotor (1) according to one of claims 7 to 11, wherein the laminated rotor core (5) comprises electrical sheets (10) stacked in the axial direction, wherein the electrical sheets (10) are arranged twisted relative to one another such that the aforementioned bevel results.

13. Asynchronous machine (2) comprising a stator with a stator winding and a cage rotor (1) as claimed in one of claims 7 to 12.

## Revendications

1. Procédé de fabrication d'un rotor ( 1 ) à cage d'écureuil pour un moteur ( 2 ) asynchrone, comprenant les stades de procédé suivante
- inclinaison d'un paquet ( 5 ) de tôles rotoriques ayant des encoches ( 4 ),
- insertion de barreaux ( 3;11;12 ) de court-circuit d'un deuxième matériau dans les encoches ( 4 ) du paquet ( 5 ) de tôles rotoriques incliné,
- coulée du côté frontal d'anneaux ( 6 ) de court-circuit en un premier matériau ayant une conductivité électrique spécifique plus petite que le deuxième matériau sur le paquet ( 5 ) de tôles rotoriques,
**caractérisé en ce que**
les barreaux ( 3;11;12 ) de court-circuit ont, avant l'insertion dans les encoches ( 4 ), une inclinaison telle qu'ils peuvent, avant une application du premier matériau coulé, être introduits dans une grande mesure sans déformation dans le paquet ( 5 ) de tôles rotoriques incliné, **en ce qu'**ils remplissent à peu près complètement une zone ( 7 ) d'encoches se trouvant à l'intérieur, considéré dans la direction radiale, de manière à ce que le premier matériau ne puisse pas, pendant l'opération de coulée, pénétrer en avant dans la zone ( 7 ) d'encoches se trouvant à l'intérieur.

2. Procédé suivant la revendication 1,
dans lequel les encoches ( 4 ) équipées de barreaux ( 3;11;12 ) de court-circuit sont remplies par un procédé de coulée sous pression du premier matériau et les anneaux ( 6 ) de court-circuit sont fabriqués au moyen du procédé de coulée sous pression.

3. Procédé suivant l'une des revendications précédentes,
dans lequel les barreaux ( 3;11;12 ) de court-circuit sont insérés dans les encoches ( 4 ), de manière à remplir du premier matériau par la coulée sous pression une zone ( 8 ) d'encoches se trouvant vers l'extérieur, considéré dans la direction radiale, du rotor ( 1 ) à cage d'écureuil.

4. Procédé suivant l'une des revendications précédentes,
dans lequel on utilise comme premier matériau de l'aluminium et comme deuxième matériau du cuivre.

5. Procédé suivant l'une des revendications précédentes,
dans lequel l'inclinaison correspond à un pas ( 9 ) d'encoche.

6. Procédé suivant l'une des revendications précédentes,
dans lequel le procédé comprend, en outre, une fabrication du paquet ( 5 ) de tôles rotoriques par empilement de tôles ( 10 ) magnétiques dans la direction axiale, les tôles ( 10 ) magnétiques étant déposée de manière déformée les unes par rapport aux autres, de manière à donner ladite inclinaison.

7. Rotor ( 1 ) à cage d'écureuil pour un moteur ( 2 ) asynchrone, dans lequel le rotor ( 1 ) à cage d'écureuil comprend .
- un paquet ( 5 ) de tôles rotoriques ayant des encoches ( 4 ),
- des anneaux ( 6 ) de court-circuit en un premier matériau coulé du côté frontal sur le paquet ( 5 ) de tôles rotoriques et
- des barreaux ( 3;11;12 ) de court-circuit disposés dans les encoches ( 4 ) et en un deuxième matériau ayant une résistivité électrique spécifique plus grande que le premier matériau,
dans lequel le paquet ( 5 ) de tôles rotoriques et les barreaux ( 3;11;12 ) de court-circuit ont une inclinaison, **caractérisé en ce que** les barreaux ( 3;11;12 ) de court-circuit remplissent à peu près complètement une zone ( 7 ) d'encoches se trouvant à l'intérieur, considéré dans la direction radiale du paquet ( 5 ) de tôles rotorique, par le fait que, lors d'une fabrication du rotor ( 1 ) de cage d'écureuil, les barreaux ( 3;11;12 ) de court-circuit ont, avant d'être insérés dans les encoches ( 4 ), une inclinaison telle qu'ils peuvent, avant une application du premier matériau coulé, être insérés dans une grande mesure sans déformation dans le paquet ( 5 ) de tôles rotoriques incliné, **en ce qu'**ils remplissent à peu près complètement une zone ( 7 ) d'encoches se trouvant à l'intérieur, considéré dans la direction radiale, de sorte que le premier matériau ne peut pas, pendant l'opération de coulée, être repoussé vers l'avant dans la zone ( 7 ) d'encoches se trouvant à l'intérieur.

8. Rotor ( 1 ) à cage d'écureuil suivant la revendication 7, dans lequel les encoches ( 4 ) équipées de barreaux ( 3;11;12 ) de court-circuit sont remplies par un procédé de coulée sous pression du premier matériau et les anneaux ( 6 ) de court-circuit sont fabriqués au moyen du procédé de coulée sous pression.

9. Rotor ( 1 ) à cage d'écureuil suivant la revendication 7 ou 8, dans lequel la zone des encoches ( 4 ) remplie du premier matériau est disposée à l'extérieur, considéré dans la direction radiale du rotor ( 1 ) à cage d'écureuil.

10. Rotor ( 1 ) à cage d'écureuil suivant l'une des revendications 7 à 9,
dans lequel le premier matériau est de l'aluminium et le deuxième matériau est du cuivre.

11. Rotor ( 1 ) à cage d'écureuil suivant l'une des revendications 7 à 10,
dans lequel l'inclinaison correspond à un pas ( 9 ) d'encoche.

12. Rotor ( 1 ) à cage d'écureuil suivant l'une des revendications 7 à 11,
dans lequel le paquet ( 5 ) de tôles rotoriques comprend des tôles ( 10 ) magnétiques empilées dans la direction axiale, les tôles ( 10 ) magnétiques étant disposées de manière déformée les unes par rapport aux autres, de manière à donner ladite inclinaison.

13. Moteur ( 2 ) asynchrone ayant un stator et un enroulement statorique et un rotor ( 1 ) à cage d'écureuil suivant l'une des revendications 7 à 12.
